# EUROPEAN PATENT SPECIFICATION

(11) **EP 4 000 478 B1**
(45) Date of publication and mention of the grant of the patent: **19.04.2023**
(21) Application number: 21202750.2
(22) Date of filing: 14.10.2021
(51) Int. Cl.: A47J 31/00, A47J 31/44, A47J 31/46, A47J 31/60

(54) **BEVERAGE DISPENSING MACHINE AND METHOD FOR OPERATING SUCH MACHINE**
GETRÄNKEMASCHINE UND VERFAHREN ZUM BETRIEB EINER SOLCHEN MASCHINE
MACHINE DE DISTRIBUTION DE BOISSONS ET PROCEDE D'UTILISATION DE LADITE MACHINE

(30) Priority: 23.11.2020 IT 202000028016
(43) Date of publication of application: 25.05.2022
(73) Proprietor: Rancilio Group S.p.A., 20015 Parabiago (MI) (IT)
(72) Inventor: DIETSCHI, Fabian, 5605 Dottikon (CH)
(74) Representative: Robba, Pierpaolo

(56) References cited:
- EP-A1- 2 583 596
- EP-A2- 3 476 260
- WO-A2-2013/112724

## Description

### Technical Field of the Invention

The present invention relates to a beverage dispensing machine which is suitable for preparing, among others, milk-based beverages and/or beverages containing milk.

The present invention also relates to a method for operating such machine.

### Prior Art

Machines for preparing and dispensing beverages are known and widespread.

Among others, fully automatic machines are known, which allow to obtain a beverage in a completely automatic way, without the intervention of any operator.

These machines include an outer casing housing a plurality of containers for storing the raw materials for the beverage preparation (such as coffee beans, coffee powder, tea leaves, milk, flavoring agents and the like) and all the functional groups necessary for the automatic preparation of a beverage, as well as means, such as pipes and valves, for connecting such functional groups to one another.

The outer casing also contains an electronic control unit including a memory in which the recipes of the beverages that can be prepared by the machine are stored, and is provided with a user interface for allowing a user to select the desired beverage.

As a result, upon selection of a beverage (for instance by pushing a button), the selected beverage is prepared in a fully automatic way, without any need of intervention of a skilled operator.

A typical example of fully automatic machines for preparing and dispensing beverages is represented by fully automatic coffee machines or coffee automats.

Such fully automatic coffee machines can be equipped either with a container for storing coffee powder or with a container for storing coffee beans that are ground upon selection of a coffee-based beverage from a user. The coffee powder is conveyed to a brewing group, where it is compressed into a coffee cake. The fully automatic coffee machine further includes a drinking water supply, one or more boilers, a pump for feeding drinking water to the boiler(s), as well as means for conveying the heated water from the boiler to the brewing group so that heated water is forced to flow through the coffee cake and the resulting beverage is conveyed from the brewing group to an outlet spout.

Due to the fact that their operation does not need the presence of a skilled operator, fully automatic machines are in particular employed in the catering business, and they can be installed in hotels, canteens, workplaces.

Also in view of these preferred applications, there is a need for fully automatic machines which are highly versatile, so as to meet the tastes of several different consumers. More particularly, there is a need for fully automatic machines which are capable of preparing several different kinds of beverages, including coffee-based beverages, tea-based beverages, milk-based beverages and so on.

With specific reference to milk-based beverages or, more generally, to beverages containing milk (such as cappuccino, mochaccino and the like), a relevant problem is related to lactose intolerance.

Lactose intolerance is a decreased ability to digest lactose, a sugar found in dairy products, due to the lack of the enzyme lactase in the small intestines to break lactose down into glucose and galactose.

Symptoms of lactose intolerance are quite annoying and may include abdominal bloating and cramps, flatulence, diarrhea, nausea, borborygmi, and vomiting.

Lactose intolerance is common worldwide, affecting the majority of the world's population with an overall estimate of around 65%.

As mentioned before, fully automatic machines can be installed in public places, such as hotels, canteens, workplaces, which can be frequented by users affected by lactose intolerance.

In order to meet the needs of these users, beverage dispensing machines have been developed which are able to prepare beverages both from regular milk (i.e. cow milk) and from lactose-free milk or from a lactose-free milk substitute (i.e. plant-based milk substitutes such as soy milk, rice milk, almond milk, coconut milk, hazelnut milk, oat milk, hemp milk, macadamia nut milk, and peanut milk, which are inherently lactose-free).

To this purpose, the beverage dispensing machine can be equipped with two different reservoirs, a first reservoir containing regular milk and a second reservoir containing lactose-free milk or a lactose-free milk substitute: upon selection of the user, a beverage can be prepared by selectively drawing regular milk from the first reservoir or lactose-free milk or the lactose-free milk substitute from the second reservoir.

Nevertheless, such solution may not be sufficient in view of users having a severe intolerance to lactose.

During preparation of a beverage, both regular milk and lactose-free milk (or the lactose-free milk substitute) flow - at least partially - in the same ducts, and through the same functional groups.

Therefore, if a beverage containing lactose-free milk (or the lactose-free milk substitute) is prepared after a beverage containing regular milk has been prepared, it is likely that small amounts of regular milk is still present along the ducts and in the functional groups of the machine.

For users affected by severe lactose intolerance, even such contamination of the components through which the lactose-free milk (or the lactose-free milk substitute) flows can be sufficient for causing undesired symptoms.

A first solution for avoiding contamination consists in providing separate functional groups and separate conveying lines for regular milk and lactose-free milk.

By way of example, document DE 202014103175U discloses an apparatus for foaming a liquid, which comprises a steam generator for generating a vapor stream, a vapor tap for dividing the flow of steam into a first sub-stream of steam and a second sub-stream of steam, a first frothing unit which is connected to a first fluid inlet and a first steam inlet and a second frothing connected to a second fluid inlet and a second steam inlet, the first sub-stream of steam being supplied to the first frothing unit through the first steam inlet and the second sub-stream of steam being supplied to the second frothing unit through the second steam inlet. According to the disclosure of DE 202014103175U, the first foaming unit can be fed with regular milk, while the second frothing unit can be fed with soy milk or lactose-free milk.

However, such solution turns out to be unsatisfactory.

Indeed, it involves an increase in the complexity of the beverage dispensing machine and in the number of components of the machine.

Besides causing an increase in the manufacturing costs of the machine, this also involves an increase in the overall size of the machine, which is not desirable.

A second solution for avoiding contamination consists in providing a rinsing or cleaning cycle, to be carried out after the preparation of each beverage, or at least after the preparation of each beverage containing regular milk.

By way of example, document DE 102017206767 discloses a milk delivery device for supplying milk from a milk reservoir to a milk dispenser through a milk transport line; a three-way valve is arranged on the milk transport line so that a detergent transport line can be connected to the milk transport line: the device can be operated either in a milk flow mode, in which the milk flows from the milk reservoir to the milk dispenser, or in a cleaning mode, in which a cleaning agent (usually based on water) flows from the detergent transport line towards the milk dispenser. According to the disclosure of DE 102017206767, the possibility of several milk reservoirs, containing different types of milk (including lactose-free milk) is provided.

However, such solution is not satisfactory, as well.

Indeed, in order to avoid lactose contamination, a rinsing cycle has to be carried out after each beverage delivery cycle, or at least after each delivery cycle of a beverage containing regular milk.

This involves relevant delays in dispensing beverages, which can be considered as a relevant drawback, especially in case of machines installed at public places frequented by many people, such as hotels, canteens, workplaces, and the like, at peak hours.

A further solution for avoiding contamination consists in removing the components through which the milk flows, so that they can be removed and cleaned after the preparation of each beverage, or at least after the preparation of each beverage containing regular milk.

By way of example, document DE 102014205160 discloses a coffee machine with a milk container connected to the coffee machine. The coffee machine has a splitter element via which in addition to a cow milk container at least one further milk container (for instance containing lactose-free milk) can be fluidly connected to the coffee machine. According to the disclosure of DE 102014205160, in order to avoid contamination, the splitter element is removable, so that it can be cleaned.

It is evident that also this solution cannot be considered as satisfactory. Moreover, it could be hardly implemented in public places frequented by many people at peak hours, such as hotels, canteens, workplaces, and the like.

Another beverage dispensing machine of the prior art is disclosed in EP 2583596 A1.

In view of the above, the main object of the present invention is to overcome the drawbacks of prior solutions, by providing a beverage dispensing machine which can be used for preparing both beverages containing regular milk and beverages containing lactose-free milk or a lactose-free milk substitute without the risk of contamination.

Another object of the present invention is to provide a beverage dispensing machine which can be used for preparing both beverages containing regular milk and beverages containing lactose-free milk or a lactose-free milk substitute without increasing the complexity of the machine structure and operation and without involving delays in beverage dispensing.

A further object of the present invention is to provide a method for operating such a beverage dispensing machine which allows to avoid the risk of contamination, while avoiding delays in beverage dispensing.

These and other objects are achieved by a machine and a method as claimed in the attached claims.

### Summary of the Invention

The beverage dispensing machine of the invention is suitable for preparing both beverages containing regular milk and beverages containing lactose-free milk or a lactose-free milk substitute and is configured so as to carry out a rinsing cycle after the preparation of each beverage containing regular milk for removing lactose.

According to the invention, lactose-free milk or the lactose-free milk substitute itself is used as rinsing agent during such rinsing cycle.

Thanks to this arrangement, no separate functional groups and/or conveying lines for regular milk and for lactose-free milk (or lactose-free milk substitute) is needed, so that duplication of components is avoided.

As a result, the beverage dispensing machine according to the invention can be compact and the manufacturing costs can be kept low.

Moreover, the rinsing cycle using lactose-free milk or the lactose-free milk substitute can be implemented as final step of the preparation of each beverage containing regular milk. In other words, in the final step of the preparation of a beverage containing regular milk, regular milk is replaced by lactose-free milk or by the lactose-free milk substitute.

As a result, no separate rinsing cycle is needed, so that no delay in beverage dispensing is caused.

The lactose-free milk or the lactose-free milk substitute flowing through the milk delivery line draws and removes any traces of lactose and the presence of a very small amount of lactose-free milk or of the lactose-free milk substitute in the beverage containing regular milk does not generate a perceivable difference in taste.

According a preferred embodiment of the invention, a predetermined time interval is set and lactose-free milk (or the lactose-free milk substitute) is made to flow from its reservoir to the outlet spout for said predetermined time interval in order to rinse and remove traces of regular milk before the preparation of a beverage containing lactose-free milk (or the lactose-free milk substitute) is started.

However, other solutions can be implemented for setting the duration of the rinsing cycle, which solutions can be based on detection of physical or chemical properties having sufficiently different values in regular milk and lactose-free milk (or the lactose-free milk substitute).

It is to be noted that in the present disclosure:
- "regular milk" means milk which has not been subj ected to any process for reducing por eliminating lactose and which has a lactose content higher than 3%; regular milk may include cow milk (4,7% lactose), goat milk (4,7% lactose), sheep milk (4,7% lactose), buffalo milk (4,86% lactose), yak milk (4,93% lactose) and the like;
- "lactose-free milk" means milk which has been subj ected to any process for reducing por eliminating lactose and which has a lactose content lower than 2%, preferably lower than 1%, most preferably equal to or lower than 0,1%;
- "lactose-free milk substitute" means a plant-based milk substitute such as soy milk, rice milk, almond milk, coconut milk, hazelnut milk, oat milk, hemp milk, macadamia nut milk, and peanut milk; it is evident that the lactose content in plant-based milk substitutes is null.

### Brief Description of the Drawings

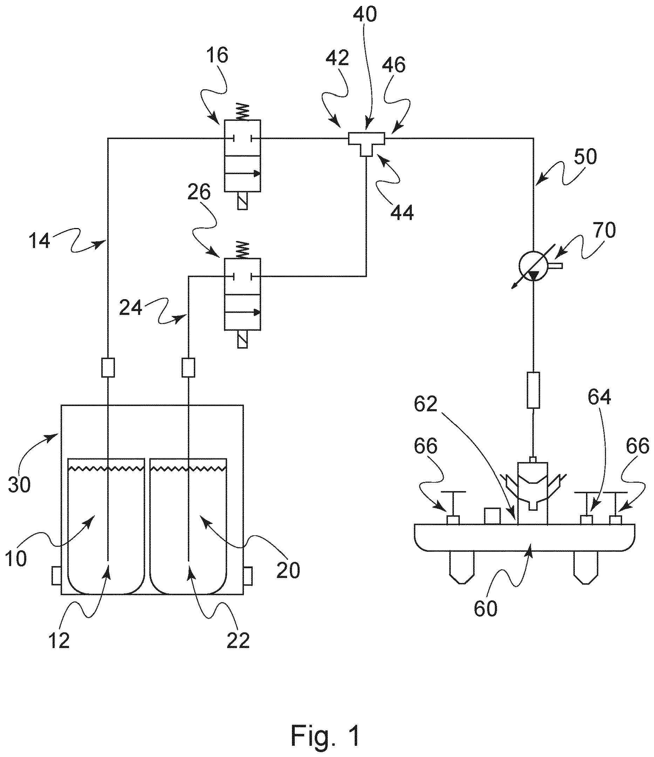

Further features and advantages of the invention will become more evident from the following description of a preferred embodiment thereof, given by way of non-limiting example, with reference to the attached Figure, which schematically represents the milk circuit in a beverage dispensing machine according to the invention.

### Detailed Description of a Preferred Embodiment of the Invention

With reference to the accompanying Figure, the hydraulic circuit of a beverage dispensing machine according to the invention is partially shown. Namely, for sake of simplicity only the portion of the hydraulic circuit concerning milk is shown in the Figure. It is to be understood that the dispensing machine could be able to prepare and dispense several kinds of different beverages, including not only milk-based beverages, but also coffee-based beverages, tea-based beverages and so on. Correspondingly, the hydraulic circuit of the beverage dispensing machine will comprise functional groups and conveying lines for brewing coffee, brewing tea, and so on. Such functional groups and conveying lines are well known in the art and, accordingly, they are not shown in the Figure, nor they will be described in detail in the present disclosure.

The beverage dispensing machine according to the invention comprises a first milk reservoir 10 and a second milk reservoir 20, said first and second milk reservoirs being intended to store different kind of milk.

Namely, in the first milk reservoir 10 regular milk is stored.

In the shown embodiment, in the second milk reservoir 20 lactose-free milk is stored. However, it is to be understood that, in other embodiments, the second milk reservoir 20 could be used for storing a lactose-free milk substitute, such as soy milk or another plant-based milk substitute.

The first and second milk reservoir are housed in a common refrigerated box 30. However, it can also be envisaged that each milk reservoir is housed in a separate refrigerated box.

A first end 12 of a first milk supply duct 14 is immersed in the first milk reservoir 10, at a level lower than the level of the liquid contained in the reservoir. The first milk supply duct 14 connects the first milk reservoir 10 to a three-way joint 40, which is arranged at the second, opposite end of said first milk supply duct 14. A first shut-off valve 16 is arranged on the first milk supply duct 14 between the first milk reservoir 10 and the three-way joint 40.

A first end 22 of a second milk supply duct 24 is immersed in the second milk reservoir 20, at a level lower than the level of the liquid contained in the reservoir. The second milk supply duct 24 connects the second milk reservoir 20 to the three-way joint 40, which is arranged at the second, opposite end of said second milk supply duct 24. A second shut-off valve 26 is arranged on the second milk supply duct 24 between the second milk reservoir 20 and the three-way joint 40.

The three-way joint 40 is provided with a first joint inlet 42 receiving the first milk supply duct 14, a second joint inlet 44 receiving the second milk supply duct 24, and a joint outlet 46. The joint outlet 46 is connected to a common milk delivery duct 50, leading from the three-way joint 40 to an outlet spout 60.

As mentioned before, the beverage dispensing machine can be designed so as to be able to prepare and dispense a plurality of different beverages. Accordingly, the outlet spout 60 can be provided with a plurality of outlets, including a milk outlet 62, a coffee outlet 64, a hot water outlet 66, an instant chocolate outlet 68, and so on.

A milk pump 70 is arranged on the milk delivery duct 50, between the three-way joint 40 and the outlet spout 60.

The milk pump 70 can selectively draw regular milk from the first milk reservoir 10 or lactose-free milk from the second milk reservoir 20.

Functional groups, such as for instance a heating group or a foaming / frothing group, can be further arranged on the milk delivery duct 50, between the three-way joint 40 and the outlet spout 60.

In a per se known manner, the beverage dispensing machine is equipped with a control unit (not shown) and with a user interface (also not shown) for letting a user select a desired beverage.

In general, in case a beverage containing regular milk is selected, the control unit is set to carry out a regular milk delivery cycle and it sends a control signal for opening the first shut-off valve 16 of the first milk supply duct 14 and closing the second shut-off valve 26 of the second milk supply duct 24. As a consequence, when the milk pump 70 is started, regular milk will be drawn from the first milk reservoir 10 and conveyed through the first milk supply duct 14 and the common milk delivery duct 50 to the outlet spout 60.

In general, in case a beverage containing lactose-free milk is selected, the control unit is set to carry out a lactose-free delivery cycle and it sends a control signal for closing the first shut-off valve 16 of the first milk supply duct 14 and opening the second shut-off valve 26 of the second milk supply duct 24. As a consequence, when the milk pump 70 is started, lactose-free milk will be drawn from the second milk reservoir 20 and conveyed through the second milk supply duct 24 and the common milk delivery duct 50 to the outlet spout 60.

It is therefore evident that only regular milk flows through the first milk supply duct 14 and only lactose-free milk flows through the second milk supply duct 24, while both regular milk and lactose-free milk flow through the milk delivery duct 50.

Therefore, in order to avoid contamination of beverages containing lactose-free milk, said milk delivery duct 50 has to be cleaned or rinsed between the preparation of a beverage containing regular milk and the preparation of a beverage containing lactose-free milk. Accordingly, the control unit can be set to carry out a rinsing cycle, in which a rinsing fluid is made to flow through milk delivery duct 50 for removing traces of regular milk from said duct and from the components arranged along duct, as well as from the outlet spout 60. According to the invention, the lactose-free milk stored in the second milk reservoir is used as rinsing fluid.

Therefore, when the control unit is set to carry out the rinsing cycle, it sends a control signal for closing the first shut-off valve 16 of the first milk supply duct 14, opening the second shut-off valve 26 of the second milk supply duct 24and starting the milk pump 70. As a consequence, lactose-free milk flows from the second milk reservoir 20 through the second milk supply duct 24 and the common milk delivery duct 50 to the outlet spout 60 and, downstream the three-way joint 40, it drags possible traces of regular milk still present on its path.

Once the milk delivery duct 50 is rinsed, the preparation of a beverage containing lactose-free milk can begin.

The arrangement according to the invention advantageously allows to effectively avoid lactose contamination without the need of implementing any additional component. Namely, no completely separate delivery lines for regular milk and lactose-free milk have to be provided.

As a result, the arrangement according to the invention does not involve any increase in costs for manufacturing the beverage dispensing machine and the overall size of such machine is not increased as well.

In a first possible embodiment, the control unit can be programmed to carry out the rinsing cycle after each preparation of a beverage containing regular milk.

In a second possible embodiment, the control unit can be programmed to carry out a rinsing cycle before each preparation of a beverage containing lactose-free milk (i.e. upon selection of a beverage containing lactose-free milk).

In a third possible embodiment, the control unit can be provided with a memory unit for storing the previously prepared beverages and it can be programmed to carry out a rinsing cycle before each preparation of a beverage containing lactose-free milk (i.e. upon selection of a beverage containing lactose-free milk) only in case the immediately precedent beverage was a beverage containing regular milk.

Even if the second and third possible embodiments involve a lower frequency of rinsing cycles and a correspondingly lower consumption of lactose-free milk, the first possible embodiment allows to remove the traces of regular milk when they are still fresh and it can turn out to be more effective.

However, according of a particularly preferred embodiment of the invention, the rinsing cycle is integrated into the cycle for preparing a beverage containing regular milk.

Therefore, when the control unit is set on a regular milk delivery mode, the beverage preparation cycle is subdivided into a first sub-cycle and a second sub-cycle: during the first, initial sub-cycle, the control unit sends a control signal for opening the first shut-off valve 16 of the first milk supply duct 14 and closing the second shut-off valve 26 of the second milk supply duct 24, so that regular milk is drawn from the first milk reservoir 10 and conveyed through the first milk supply duct 14 and the common milk delivery duct 50 to the outlet spout 60, while during the second, final sub-cycle, the control unit sends a control signal for closing the first shut-off valve 16 of the first milk supply duct 14 and opening the second shut-off valve 26 of the second milk supply duct 24, so that lactose-free milk is drawn from the second milk reservoir 20 and conveyed through the second milk supply duct 24 and the common milk delivery duct 50 to the outlet spout 60.

As a result, the arrangement according to this preferred embodiment of the invention does not involve any separate rinsing cycle between the cycles for preparing beverages, so that no delay in beverage dispensing is generated.

In this respect, it can be note that the beverage dispensing machine according to the invention may comprise a traditional rinsing circuit for carrying out an additional rinsing cycle using a water-based rinsing agent (not shown in the Figure).

Such rinsing circuit can be used for carrying out periodic rinsing cycles with the water-based rinsing agent for hygienic purposes. However, such rinsing cycles with the water-based rinsing agent has not to be carried out at each beverage dispensing cycle. Accordingly, there is no delay in beverage dispensing.

According to a preferred embodiment of the invention the rinsing cycle has a predetermined duration: lactose-free milk flows from the second milk reservoir 20 to the outlet spout 60 through the milk delivery duct for a predetermined time interval, at the end of which the milk pump 70 is stopped and the beverage dispensing machine is ready for starting the preparation of a new beverage.

In the particularly preferred embodiment of the invention, according to which the rinsing cycle is integrated into the cycle for preparing a beverage containing regular milk, this means that the second, final sub-cycle has a predetermined duration, sufficient for removing any traces of lactose from the common milk delivery duct 50 and the outlet spout 60. However, in alternative embodiments of the invention a sensor is positioned along the delivery duct for detecting a physical or chemical property of the fluid flowing through said duct and the rinsing cycle is continued until the detected value coincides with the known value of lactose-free milk.

It is evident that such solution is effective only if the detected property has sufficiently different values in regular milk and lactose-free milk.

It is to be noted that - even in the preferred embodiment in which the rinsing cycle has a predetermined duration -an adequate physical or chemical property (having sufficiently different values in regular milk and lactose-free milk) can be used in a calibration procedure for determining the value of such predetermined duration.

It is to be noted that experimental tests proved that a flow rate of 16,5 ml/s, a duration of 0,7 s is sufficient for guaranteeing a proper rinsing of the milk delivery duct. This means at each rinsing cycle about 11,5 ml of lactose-free milk are used, which is a sufficiently low amount to not negatively affect the operating costs of the beverage dispensing machine. Moreover, in the particularly preferred embodiment of the invention, according to which the rinsing cycle is integrated into the cycle for preparing a beverage containing regular milk, the amount of lactose-free milk is sufficiently low to not perceivably affect the taste of the prepared beverage.

It is therefore evident from the above disclosure that the invention achieves the object set forth above.

It is also evident that the embodiment disclosed above in detail shall be considered in no way as limiting and several modifications and variants within the reach of those skilled in the art can be implemented, without departing from the scope of protection as defined by the appended claims.

More particularly, even if in the disclosure of the preferred embodiment reference was made to lactose-free milk, it is evident that the second milk reservoir could contain a plant-based lactose-free milk substitute.

In this case, the machine according to the invention could meet not only the needs of users affected by lactose intolerance but also the needs of vegan users.

## Claims

1. Beverage dispensing machine, including:
- a first milk reservoir (10), in which regular milk is stored,
- a second milk reservoir (20), in which lactose-free milk or a lactose-free milk substitute is stored,
- a first milk supply duct (14), which connects said first milk reservoir (10) to a first inlet (42) of a three-way joint (40), a first shut-off valve (16) being arranged on said first milk supply duct (14) between said first milk reservoir and said three-way joint 40.
- a second milk supply duct (24), which connects said second milk reservoir (20) to a second inlet (44) of said three-way joint (40), a second shut-off valve (26) being arranged on said second milk supply duct (24) between said second milk reservoir and said three-way joint,
- a milk delivery duct (50), which connects the outlet (46) of said three-way joint (40) to an outlet spout (60), a milk pump (70) being arranged on said milk delivery duct (50) between said three-way joint and said outlet spout,
wherein said beverage dispensing machine is equipped with a control unit and with a user interface for selection of a desired beverage,
- the control unit being programmed to carry out a regular milk delivery cycle, in which it sends a control signal for opening said first shut-off valve (16) and closing said second shut-off valve (26) and for starting said milk pump (70), whereby regular milk is drawn from said first milk reservoir and conveyed through said first milk supply duct and said milk delivery duct to said outlet spout;
- the control unit being further programmed to carry out a lactose-free delivery cycle, in which it sends a control signal for closing said first shut-off valve (16) and opening said second shut-off valve (26) and for starting said milk pump (70), whereby lactose-free milk or the lactose-free milk substitute is drawn from said second milk reservoir and conveyed through said second milk supply duct and said milk delivery duct to said outlet spout; and
- the control unit being further programmed to carry out a rinsing cycle, in which it sends a control signal for causing a rinsing fluid to flow through said milk delivery duct to said outlet spout;
whereby lactose-free milk or the lactose-free milk substitute stored in said second milk reservoir (20) is used as rinsing fluid and during said rinsing cycle said control unit sends a control signal for closing said first shut-off valve (16) and opening said second shut-off valve (26) and for starting said milk pump (70), whereby lactose-free milk or the lactose-free milk substitute is drawn from said second milk reservoir and conveyed through said second milk supply duct and said milk delivery duct to said outlet spout.

2. Beverage dispensing machine according to claim 1, wherein said rinsing cycle is integrated into said a regular milk delivery cycle, whereby the regular milk delivery cycle is subdivided into a first, initial sub-cycle and a second, final sub-cycle and the control unit sends a control signal for opening said first shut-off valve (16) and closing said second shut-off valve (26) and for starting said milk pump (70) in said first, initial sub-cycle, regular milk being drawn from said first milk reservoir and conveyed through said first milk supply duct and said milk delivery duct to said outlet spout, and the control unit sends a control signal for closing said first shut-off valve (16) and opening said second shut-off valve (26) and for starting said milk pump (70) in said second, final sub-cycle, lactose-free milk or the lactose-free milk substitute being drawn from said second milk reservoir and conveyed through said second milk supply duct and said milk delivery duct to said outlet spout.

3. Beverage dispensing machine according to claim 1 or 2, wherein in said rinsing cycle said control unit is programmed for letting said milk pump run for a predetermined time interval.

4. Beverage dispensing machine according to claim 1 or 2, wherein a sensor is arranged along said milk delivery duct for detecting a physical or chemical property of a fluid flowing through said milk delivery duct, wherein the value of said physical or chemical property for regular milk and for lactose-free milk or the lactose-free milk substitute are stored in a memory unit of said control unit, and wherein in said rinsing mode said control unit is programmed for driving said milk pump until the detected value of said physical or chemical property reaches the stored value of said physical or chemical property for lactose-free milk or the lactose-free milk substitute.

5. Beverage dispensing machine according to claim 1, wherein said control unit is programmed to carry out said rinsing cycle immediately after said regular milk delivery cycle.

6. Beverage dispensing machine according to claim 1, wherein said control unit is programmed to carry out said rinsing cycle immediately before said lactose-free milk delivery cycle.

7. Method for operating a beverage dispensing machine according to any of claims 1 - 6, comprising the steps of:
- checking the selection made by a user through said user interface;
- if a beverage containing regular milk is selected, triggering a regular milk delivery cycle, said regular milk delivery cycle comprising the sub-steps of
- opening said first shut-off valve (16),
- closing said second shut-off valve (26) and
- starting said milk pump (70);
- if a beverage containing lactose-free milk is selected, triggering a lactose-free milk delivery cycle, said lactose-free milk delivery cycle comprising the sub-steps of
- closing said first shut-off valve (16),
- opening said second shut-off valve (26), and
- starting said milk pump (70),
wherein said method further comprises a step of triggering a rinsing cycle between a regular milk delivery cycle and a lactose-free milk delivery cycle,
**characterized in that** lactose-free milk or the lactose-free milk substitute stored in said second milk reservoir (20) is used as rinsing fluid and said rinsing cycle comprises the sub-steps of
- closing said first shut-off valve (16),
- opening said second shut-off valve (26), and
- starting said milk pump (70).

8. Method according to claim 7, wherein said rinsing cycle is integrated into said a regular milk delivery cycle, whereby said regular milk delivery cycle comprises a first, initial sub-cycle including the sub-steps of
- opening said first shut-off valve (16),
- closing said second shut-off valve (26) and
- starting said milk pump (70);
and a second, final sub-cycle including the sub-steps of
- closing said first shut-off valve (16),
- opening said second shut-off valve (26), and
- starting said milk pump (70),

9. Method according to claim 7, wherein during said rinsing cycle said milk pump (70) runs for a predetermined time interval.

10. Method according to claim 7, wherein said rinsing cycle further comprises the steps of:
- detecting a physical or chemical property of the fluid flowing through said milk delivery duct,
- comparing the detected value of said physical or chemical property with the value of said physical or chemical property for lactose-free milk or the lactose-free milk substitute, and
- running said milk pump until said detected value of said physical or chemical property reaches said value of said physical or chemical property for lactose-free milk or the lactose-free milk substitute.

11. Method according to claim 7, wherein said rinsing cycle is carried out immediately after each regular milk delivery cycle.

12. Method according to claim 7, wherein said rinsing cycle is carried out immediately before each lactose-free milk delivery cycle.

## Patentansprüche

1. Getränkemaschine mit:
- einem ersten Milchtank (10), in dem gewöhnliche Milch gelagert wird,
- einem zweiten Milchtank (20), in dem laktosefreie Milch oder ein laktosefreier Milchersatz gelagert werden,
- einer ersten Milchzuführleitung (14), die den ersten Milchtank (10) an einen ersten Einlass (42) einer Dreiwegeverbindung (40) anschließt, wobei ein erstes Absperrventil (16) zwischen dem ersten Milchtank und der Dreiwegeverbindung (40) in der ersten Milchzuführleitung (14) angeordnet ist,
- einer zweiten Milchzuführleitung (24), die den zweiten Milchtank (20) an einen zweiten Einlass (44) der Dreiwegeverbindung (40) anschließt, wobei ein zweites Absperrventil (26) zwischen dem zweiten Milchtank und der Dreiwegeverbindung in der zweiten Milchzuführleitung (24) angeordnet ist,
- einer Milchausgabeleitung (50), die den Auslass (46) der Dreiwegeverbindung (40) an eine Auslassmündung (60) anschließt, wobei eine Milchpumpe (70) zwischen dem Dreiwegeanschluss und der Auslassmündung in der Milchausgabeleitung (50) angeordnet ist,
wobei die Getränkemaschine mit einer Steuereinheit und mit einer Benutzerschnittstelle zur Auswahl eines gewünschten Getränks versehen ist,
- die Steuereinheit programmiert ist, einen gewöhnlichen Milchabgabezyklus durchzuführen, in dem sie ein Steuersignal zum Öffnen des ersten Absperrventils (16) und zum Schließen des zweiten Absperrventils (26) und zum Starten der Milchpumpe (70) aussendet, wonach reguläre Milch aus dem ersten Milchtank gezogen und durch die erste Milchzuführleitung und die Milchausgabeleitung an die Auslassmündung gefördert wird,
- die Steuereinheit zudem programmiert ist, einen laktosefreien Abgabezyklus durchzuführen, in dem sie ein Steuersignal zum Schließen des ersten Absperrventils (16) und zum Öffnen des zweiten Absperrventils (26) und zum Starten der Milchpumpe (70) aussendet, wonach laktosefreie Milch oder laktosefreier Milchersatz aus dem zweiten Milchtank gezogen und durch die zweite Milchzuführleitung und die Milchausgabeleitung zu der Auslassmündung gefördert wird, und
- die Steuereinheit zudem programmiert ist, einen Spülzyklus durchzuführen, in dem sie ein Signal aussendet, um zu bewirken, dass eine Spülflüssigkeit durch die Milchausgabeleitung zu der Ausgabemündung strömt,
wobei in dem zweiten Milchtank (20) gespeicherte laktosefreie Milch oder laktosefreier Milchersatz als Reinigungsflüssigkeit verwendet werden und während des Spülzyklus die Steuereinheit ein Steuersignal zum Schließen des ersten Absperrventils (16) und zum Öffnen des zweiten Absperrventils (26) und zum Starten der Milchpumpe (70) aussendet, wonach laktosefreie Milch oder laktosefreier Milchersatz aus dem zweiten Milchreservoir gezogen und durch die zweite Milchzuführleitung und die Milchausgabeleitung zu der Auslassmündung gefördert werden.

2. Getränkemaschine nach Anspruch 1, wobei der Spülzyklus in einen regulären Milchabgabezyklus integriert ist, wobei der gewöhnliche Milchabgabezyklus in einen ersten, anfänglichen Teilzyklus und einen zweiten, abschließenden Teilzyklus unterteilt ist und die Steuereinheit ein Steuersignal zum Öffnen des ersten Absperrventils (16) und zum Schließen des zweiten Absperrventils (26) und zum Starten der Milchpumpe (70) in dem ersten, anfänglichen Teilzyklus aussendet, gewöhnliche Milch aus dem ersten Milchtank gezogen und durch die erste Milchzuführleitung und die Milchausgabeleitung zu der Auslassmündung gefördert wird, und die Steuereinheit ein Steuersignal zum Schließen des ersten Absperrventils (16) und zum Öffnen des zweiten Absperrventils (26) und zum Starten der Milchpumpe (70) in dem zweiten abschließenden Teilzyklus aussendet, laktosefreie Milch oder laktosefreier Milcherersatz aus dem zweiten Milchtank gezogen und durch die zweite Milchzuführleitung und die Milchausgabeleitung zu der Auslassmündung gefördert werden.

3. Getränkemaschine nach Anspruch 1 oder 2, wobei die Steuereinheit programmiert ist, in dem Spülzyklus die Milchpumpe für eine vorgegebene Zeitspanne laufen zu lassen.

4. Getränkemaschine nach Anspruch 1 oder 2, wobei ein Sensor entlang der Milchausgabeleitung angeordnet ist, um eine physikalische oder chemische Eigenschaft einer durch die Milchabgabeleitung strömenden Flüssigkeit zu erfassen, wobei der Wert der physikalischen oder chemischen Eigenschaft für gewöhnliche Milch und für laktosefreie Milch oder laktosefreien Milchersatz in einem Speicher der Steuereinheit gespeichert sind, und wobei in dem Spülmodus die Steuereinheit programmiert ist, die Milchpumpe zu betätigen, bis der erfasste Wert der physikalischen oder chemischen Eigenschaft den gespeicherten Wert der physikalischen oder chemischen Eigenschaft von laktosefreier Milch oder laktosefreiem Milchersatz erreicht.

5. Getränkemaschine nach Anspruch 1, wobei die Steuereinheit programmiert ist, den Spülzyklus sofort nach dem gewöhnlichen Milchabgabezyklus durchzuführen.

6. Getränkemaschine nach Anspruch 1, wobei die Steuereinheit programmiert ist, den Spülzyklus unmittelbar vor dem laktosefreien Milchabgabezyklus durchzuführen.

7. Verfahren zum Betrieb einer Getränkemaschine nach einem der Ansprüche 1 bis 6 mit den Schritten:
- Prüfen der von einem Benutzer durch die Benutzerschnittstelle durchgeführten Auswahl,
- wenn ein gewöhnliche Milch enthaltendes Getränk gewählt ist, Auslösen eines gewöhnlichen Milchabgabezyklus, wobei der gewöhnliche Milchabgabezyklus die folgenden Teilschritte enthält:
- Öffnen des ersten Absperrventils (16),
- Schließen des zweiten Absperrventils (26) und
- Starten der Milchpumpe (70),
- wenn ein laktosefreies milchhaltiges Getränk ausgewählt ist, Auslösen eines laktosefreien Milchabgabezyklus, wobei der laktosefreie Milchabgabezyklus die folgenden Teilschritte enthält:
- Schließen des ersten Absperrventils (16),
- Öffnen des zweiten Absperrventils (26), und
- Starten der Milchpumpe (70),
wobei das Verfahren zudem einen Schritt des Auslösens eines Spülzyklus zwischen einem gewöhnlichen Milchabgabezyklus und einem laktosefreien Milchabgabezyklus enthält,
**dadurch gekennzeichnet, dass** die in dem zweiten Milchtank (20) gespeicherte laktosefreie Milch oder der laktosefreie Milchersatz als Spülflüssigkeit verwendet werden und der Spülzyklus die folgenden Teilschritte enthält:
- Schließen des ersten Absperrventils (16),
- Öffnen des zweiten Absperrventils (26) und
- Starten der Milchpumpe (70).

8. Verfahren nach Anspruch 7, wobei der Spülzyklus in einen gewöhnlichen Milchabgabezyklus integriert ist, wobei der gewöhnliche Milchabgabezyklus einen ersten anfänglichen Teilzyklus mit den folgenden Teilschritten enthält:
- Öffnen des ersten Absperrventils (16),
- Schließen des zweiten Absperrventils (26) und
- Starten der Milchpumpe (70),
und ein zweiter, abschließender Teilzyklus die folgenden Teilschritte enthält:
- Schließen des ersten Absperrventils (16)
- Öffnen des zweiten Absperrventils (26), und
- Starten der Milchpumpe (70).

9. Verfahren nach Anspruch 7, wobei in dem Spülzyklus die Milchpumpe (70) während einer vorgegebenen Zeitspanne läuft.

10. Verfahren nach Anspruch 7, wobei der Spülzyklus zudem die folgenden Schritte enthält:
- Erfassen einer physikalischen oder chemischen Eigenschaft der durch die Milchausgabeleitung strömenden Flüssigkeit,
- Vergleichen des erfassten Werts der physikalischen oder chemischen Eigenschaft mit dem Wert der physikalischen oder chemischen Eigenschaft von laktosefreier Milch oder laktosefreiem Milchersatz und
- Betreiben der Milchpumpe, bis der erfasste Wert der physikalischen oder chemischen Eigenschaft den Wert der physikalischen oder chemischen Eigenschaft von laktosefreier Milch oder laktosefreiem Milchersatz erreicht.

11. Verfahren nach Anspruch 7, wobei der Spülzyklus sofort nach jedem gewöhnlichen Milchabgabezyklus durchgeführt wird.

12. Verfahren nach Anspruch 7, wobei der Spülzyklus unmittelbar vor jedem laktosefreien Milchabgabezyklus durchgeführt wird.

## Revendications

1. - Machine de distribution de boissons, comprenant :
- un premier réservoir de lait (10), dans lequel du lait ordinaire est stocké,
- un second réservoir de lait (20), dans lequel du lait sans lactose ou un substitut de lait sans lactose est stocké,
- une première conduite d'alimentation en lait (14), qui relie ledit premier réservoir de lait (10) à une première entrée (42) d'un raccord à trois voies (40), une première vanne d'arrêt (16) étant disposée sur ladite première conduite d'alimentation en lait (14) entre ledit premier réservoir de lait et ledit raccord à trois voies (40),
- une seconde conduite d'alimentation en lait (24), qui relie ledit second réservoir de lait (20) à une seconde entrée (44) dudit raccord à trois voies (40), une seconde vanne d'arrêt (26) étant disposée sur ladite seconde conduite d'alimentation en lait (24) entre ledit second réservoir de lait et ledit raccord à trois voies,
- une conduite de distribution de lait (50), qui relie la sortie (46) dudit raccord à trois voies (40) à un bec de sortie (60), une pompe à lait (70) étant disposée sur ladite conduite de distribution de lait (50) entre ledit raccord à trois voies et ledit bec de sortie,
ladite machine de distribution de boissons étant équipée d'une unité de commande et d'une interface utilisateur pour la sélection d'une boisson souhaitée,
- l'unité de commande étant programmée pour réaliser un cycle de distribution de lait ordinaire, dans lequel elle envoie un signal de commande pour ouvrir ladite première vanne d'arrêt (16) et fermer ladite seconde vanne d'arrêt (26) et pour démarrer ladite pompe à lait (70), ce par quoi du lait ordinaire est tiré dudit premier réservoir de lait et transporté à travers ladite première conduite d'alimentation en lait et ladite conduite de distribution de lait jusqu'audit bec de sortie ;
- l'unité de commande étant en outre programmée pour réaliser un cycle de distribution sans lactose, dans lequel elle envoie un signal de commande pour fermer ladite première vanne d'arrêt (16) et ouvrir ladite seconde vanne d'arrêt (26) et pour démarrer ladite pompe à lait (70), ce par quoi du lait sans lactose ou du substitut de lait sans lactose est tiré dudit second réservoir de lait et transporté à travers ladite seconde conduite d'alimentation en lait et ladite conduite de distribution de lait jusqu'audit bec de sortie ; et
- l'unité de commande étant en outre programmée pour réaliser un cycle de rinçage, dans lequel elle envoie un signal de commande pour amener un fluide de rinçage à s'écouler à travers ladite conduite de distribution de lait jusqu'audit bec de sortie ;
ce par quoi du lait sans lactose ou du substitut de lait sans lactose stocké dans ledit second réservoir de lait (20) est utilisé comme fluide de rinçage et pendant ledit cycle de rinçage ladite unité de commande envoie un signal de commande pour fermer ladite première vanne d'arrêt (16) et ouvrir ladite seconde vanne d'arrêt (26) et pour démarrer ladite pompe à lait (70), ce par quoi du lait sans lactose ou du substitut de lait sans lactose est tiré dudit second réservoir de lait et transporté à travers ladite seconde conduite d'alimentation en lait et ladite conduite de distribution de lait jusqu'audit bec de sortie.

2. - Machine de distribution de boissons selon la revendication 1, dans laquelle ledit cycle de rinçage est intégré dans un cycle de distribution de lait ordinaire précité, ce par quoi le cycle de distribution de lait ordinaire est subdivisé en un premier sous-cycle, initial, et un second sous-cycle, final, et l'unité de commande envoie un signal de commande pour ouvrir ladite première vanne d'arrêt (16) et fermer ladite seconde vanne d'arrêt (26) et pour démarrer ladite pompe à lait (70) dans ledit premier sous-cycle, initial, du lait ordinaire étant tiré dudit premier réservoir de lait et transporté à travers ladite première conduite d'alimentation en lait et ladite conduite de distribution de lait jusqu'audit bec de sortie, et l'unité de commande envoie un signal de commande pour fermer ladite première vanne d'arrêt (16) et ouvrir ladite seconde vanne d'arrêt (26) et pour démarrer ladite pompe à lait (70) dans ledit second sous-cycle, final, du lait sans lactose ou du substitut de lait sans lactose étant tiré dudit second réservoir de lait et transporté à travers ladite seconde conduite d'alimentation en lait et ladite conduite de distribution de lait jusqu'audit bec de sortie.

3. - Machine de distribution de boissons selon la revendication 1 ou 2, dans laquelle, dans ledit cycle de rinçage, ladite unité de commande est programmée pour laisser fonctionner ladite pompe à lait pendant un intervalle de temps prédéterminé.

4. - Machine de distribution de boissons selon la revendication 1 ou 2, dans laquelle un capteur est disposé le long de ladite conduite de distribution de lait pour détecter une propriété physique ou chimique d'un fluide s'écoulant à travers ladite conduite de distribution de lait, la valeur de ladite propriété physique ou chimique pour du lait ordinaire et pour du lait sans lactose ou du substitut de lait sans lactose étant stockées dans une unité de mémoire de ladite unité de commande, et dans laquelle, dans ledit mode de rinçage, ladite unité de commande est programmée pour entraîner ladite pompe à lait jusqu'à ce que la valeur détectée de ladite propriété physique ou chimique atteigne la valeur stockée de ladite propriété physique ou chimique pour du lait sans lactose ou du substitut de lait sans lactose.

5. - Machine de distribution de boissons selon la revendication 1, dans laquelle ladite unité de commande est programmée pour réaliser ledit cycle de rinçage immédiatement après ledit cycle de distribution de lait ordinaire.

6. - Machine de distribution de boissons selon la revendication 1, dans laquelle ladite unité de commande est programmée pour réaliser ledit cycle de rinçage immédiatement avant ledit cycle de distribution de lait sans lactose.

7. - Procédé de fonctionnement d'une machine de distribution de boissons selon l'une quelconque des revendications 1 à 6, comprenant les étapes :
- vérifier la sélection réalisée par un utilisateur par l'intermédiaire de ladite interface utilisateur ;
- si une boisson contenant du lait ordinaire est sélectionnée, déclencher un cycle de distribution de lait ordinaire, ledit cycle de distribution de lait ordinaire comprenant les sous-étapes
- ouvrir ladite première vanne d'arrêt (16),
- fermer ladite second vanne d'arrêt (26), et
- démarrer ladite pompe à lait (70) ;
- si une boisson contenant du lait sans lactose est sélectionnée, déclencher un cycle de distribution de lait sans lactose, ledit cycle de distribution de lait sans lactose comprenant les sous-étapes
- fermer ladite première vanne d'arrêt (16),
- ouvrir ladite second vanne d'arrêt (26), et
- démarrer ladite pompe à lait (70),
ledit procédé comprenant en outre une étape de déclenchement d'un cycle de rinçage entre un cycle de distribution de lait ordinaire et un cycle de distribution de lait sans lactose,
**caractérisé par le fait que** du lait sans lactose ou du substitut de lait sans lactose stocké dans ledit second réservoir de lait (20) est utilisé comme fluide de rinçage et ledit cycle de rinçage comprend les sous-étapes
- fermer ladite première vanne d'arrêt (16),
- ouvrir ladite second vanne d'arrêt (26), et
- démarrer ladite pompe à lait (70).

8. - Procédé selon la revendication 7, dans lequel ledit cycle de rinçage est intégré dans un cycle de distribution de lait ordinaire précité, ce par quoi ledit cycle de distribution de lait ordinaire comprend un premier sous-cycle, initial, comprenant les sous-étapes
- ouvrir ladite première vanne d'arrêt (16),
- fermer ladite second vanne d'arrêt (26), et
- démarrer ladite pompe à lait (70) ;
et un second sous-cycle, final, comprenant les sous-étapes
- fermer ladite première vanne d'arrêt (16),
- ouvrir ladite second vanne d'arrêt (26), et
- démarrer ladite pompe à lait (70).

9. - Procédé selon la revendication 7, dans lequel, pendant ledit cycle de rinçage, ladite pompe à lait (70) fonctionne pendant un intervalle de temps prédéterminé.

10. - Procédé selon la revendication 7, dans lequel ledit cycle de rinçage comprend en outre les étapes :
- détecter une propriété physique ou chimique du fluide s'écoulant à travers ladite conduite de distribution de lait,
- comparer la valeur détectée de ladite propriété physique ou chimique à la valeur de ladite propriété physique ou chimique pour du lait sans lactose ou du substitut de lait sans lactose, et
- faire fonctionner ladite pompe à lait jusqu'à ce que ladite valeur détectée de ladite propriété physique ou chimique atteigne ladite valeur de ladite propriété physique ou chimique pour du lait sans lactose ou du substitut de lait sans lactose.

11. - Procédé selon la revendication 7, dans lequel ledit cycle de rinçage est réalisé immédiatement après chaque cycle de distribution de lait ordinaire.

12. - Procédé selon la revendication 7, dans lequel ledit cycle de rinçage est réalisé immédiatement avant chaque cycle de distribution de lait sans lactose.
